# EUROPEAN PATENT SPECIFICATION

(11) **EP 4 720 986 B1**
(45) Date of publication and mention of the grant of the patent: **07.10.2026**
(21) Application number: 24726649.7
(22) Date of filing: 21.05.2024
(51) Int. Cl.: G06T 12/30, G06T 5/94

(54) **REPRESENTATION OF COMPUTED TOMOGRAPHY DATA**
DARSTELLUNG VON COMPUTERTOMOGRAPHIEDATEN
REPRÉSENTATION DE DONNÉES DE TOMOGRAPHIE ASSISTÉE PAR ORDINATEUR

(30) Priority: 26.05.2023 EP 23175630
(43) Date of publication of application: 08.04.2026
(73) Proprietor: Koninklijke Philips N.V., 5656 AE Eindhoven (NL)
(72) Inventor: KRUIS, Matthijs Ferdinand, 5656 AG Eindhoven (NL)
(74) Representative: Philips Intellectual Property & Standards
(86) International application number: PCT/EP2024/063919
(87) International publication number: WO 2024/245815

(56) References cited:
- US-B1- 9 761 022
- TATSUGAMI FUMINARI ET AL: "Dual-energy CT: minimal essentials for radiologists", JAPANESE JOURNAL OF RADIOLOGY, SPRINGER JAPAN, TOKYO, vol. 40, no. 6, 4 January 2022 (2022-01-04), pages 547 - 559, XP037870835, ISSN: 1867-1071, [retrieved on 20220104], DOI: 10.1007/S11604-021-01233-2

## Description

### FIELD OF THE INVENTION

The present invention relates to the field of medical data processing, and in particular to the field of processing Computed Tomography (CT) data for representation.

### BACKGROUND OF THE INVENTION

Computed tomography (CT) is a technique that enables measurement of the local attenuation of an object in three dimensions, by measuring the transmission of a (polychromatic) X-ray beam in all axial directions around the object and reconstructing this information through back-projection. The reconstructed information represents the local attenuation (µ) per location.

The typical way of representing the attenuation properties of an object (e.g. body tissue of a subject/patient) to a user is not by reporting the local attenuation µ, but rather to use the Hounsfield Unit (HU) scale.

TATSUGAMI FUMINARI ET AL: "Dual-energy CT: minimal essentials for radiologists", JAPANESE JOURNAL OF RADIOLOGY, SPRINGER JAPAN, TOKYO, vol. 40, no. 6, 4 January 2022, pages 547-559, XP037870835, discloses identifying first and second materials of interest for CT data of a plurality of CT images, wherein at least one of the first and second materials of interest is neither air nor water and computing the Hounsfield unit scale for the first and second materials of interest across the CT data.

The HU scale normalizes the attenuation with respect to air and water. More specifically, the Hounsfield Unit (HU) scale is defined based on the linear attenuation coefficient of water and air at a specific X-ray energy level (typically 120 kVp). This is because air represents the situation outside body tissue and the body tissue contains mainly water. Specifically, the HU is a scale that assigns a numerical value to the radiodensity of a tissue, with air at -1000 HU and water at 0 HU. The scale is defined by the following equation: $HU = 1000 \times \frac{μ - {μ}_{water}}{{μ}_{water} - {μ}_{air}}$ (i), wherein *µ* is the linear attenuation coefficient of the tissue, *µ_{water}* is the linear attenuation coefficient of water, and *µₐᵢᵣ* is the linear attenuation coefficient of air. The linear attenuation coefficient is a measure of how strongly a material absorbs X-rays, with higher values indicating higher absorption.

The HU can vary with different X-ray energy levels used in CT imaging. This is because the HU value is dependent on the linear attenuation coefficient of the tissue, which is itself dependent on the energy of the X-ray photons. The linear attenuation coefficient of a material decreases with increasing X-ray energy, so the HU values obtained at different X-ray energy levels can be different.

As a result, when switching between X-ray energy levels in spectral monoenergetic images, the contrasts between materials will change. This can make it difficult to interpret the images.

### SUMMARY OF THE INVENTION

The invention is defined by the claims.

According to examples in accordance with an aspect of the invention, there is provided a method for representation of CT data. The method comprises: identifying first and second materials of interest for CT data of a plurality of CT images, wherein at least one of the first and second materials of interest is neither air nor water; and normalizing the Hounsfield unit scale for the first and second materials of interest across the CT data so that the HU values for each of the first and second materials of interest are substantially constant across the plurality of CT images.

Proposed concepts thus aim to provide schemes, solutions, concepts, designs, methods and systems pertaining to improving representation or visualization of CT data. In particular, embodiments of the invention propose that the HU scale can be normalized for materials other than air and water by using one or more different reference materials. That is, embodiment propose a different scale, that normalizes the scale for two given materials (where at least one of the materials is neither air nor water), such that level/window settings in a visualization of the CT data may not need to be rescaled. In this way, a material-specific HU scale may be provided.

The proposed concept(s) may be considered to be similar to a concept of changing the Celsius scale from being normalized with respect to water (0 being melting point of water, and 100 being the boiling point) to being normalized with respect to another material. For instance, the proposed concept(s) may be akin to defining an iron-Celsius scale, wherein the melting point of iron as defined as 0, and the boiling point of iron defined as 100.

Put another way, it is proposed that a modified HU scale may normalize the attenuation with respect to materials other than air and water. By way of example, according to proposed embodiments, the HU scale may be defined based on the linear attenuation coefficient of bone and fat so that, across the CT data, the HU values for bone and fat remain substantially constant across a plurality of CT images of different X-ray energy levels.

Embodiments propose to alter the representation of CT data, which may improve interpretation of the data for specific materials of interest. Accordingly, embodiments may be used in relation to medical assessment and/or treatment selection so as support a medical professional. Such embodiments may also support clinical planning. Improved Clinical Decision Support (CDS) may therefore be provided by proposed concepts.

The first or second material of interest may be one of: iodine; bone; bone marrow; fat; iron; calcium; white brain matter; grey brain matter; gadolinium; gold; oxygen; xenon; neon; blood; uric acid; NaCl; muscle; water; air or a combination thereof, for example. In this way, embodiments may support improved representation of specific materials of interest for medical evaluation and/or assessment.

In some embodiments, normalizing the Hounsfield unit scale for the first and second materials across the CT data may comprise: adjusting the Hounsfield unit scale for the first material of interest across the CT data so that the HU values for the first material of interest across the plurality of CT images are substantially equal to zero. In this way, the HU scale may assign a numerical value of zero to the radiodensity of the first material of interest.

For example, normalizing the Hounsfield unit scale for the first and second materials across the CT data may comprise adjusting a local attenuation value µ according to the following equation: ${HU}_{α , β} = - T \times \frac{μ - {μ}_{β}}{{μ}_{β} - {μ}_{α}}$ (ii) wherein T is a target value (e.g. 10, 100, 500, -1000, etc.) for defining a reference point/value of the adjusted scale, *µ_{α}* is the local attenuation value for the first material, and *µ_{β}* is the local attenuation for the second material.

Some embodiments may further comprise: identifying a third material of interest for the CT data, wherein the third material of interest is different from the first and second materials of interest. Normalizing the Hounsfield unit scale for the first and second materials across the CT data may then comprise: determining whether a difference between: the HU values for the third material of interest; and the HU values for the first material of interest is non-zero across the plurality of CT images; and responsive to determining the difference is not non-zero across the plurality of CT images, adjusting the Hounsfield unit scale for the first material of interest so that the difference between: the HU values for the third material of interest; and the HU values for the first material of interest is non-zero across the plurality of CT images.

**In** an embodiment, adjusting the Hounsfield unit scale may comprise adjusting a local attenuation value *µ* according to the following equation: ${HUadj}_{α , β} = - T \times \frac{μ - max \left({μ}_{β}, {μ}_{α}\right)}{max \left({μ}_{β}, {μ}_{α}\right) - min \left({μ}_{β}, {μ}_{α}\right)}$ (iii), wherein T is the target value (e.g. 10, 100, 500, -1000, etc.), *µ_{α}* is the local attenuation value for the first material, and *µ_{β}* is the local attenuation for the second material.

By way of example only, the plurality of CT images may comprise plurality of monoenergetic spectral images. Embodiments may therefore be employed to ensure that the HU values for each of the first and second materials of interest are substantially constant across a plurality monoenergetic spectral images captured at different X-ray energy levels.

Embodiments may be employed in combination with conventional/existing CT scanning apparatus. In this way, embodiments may integrate into legacy systems so as to improve and/or extend their functionality and capabilities. An improved CT scanner/imaging system may therefore be provided by proposed embodiments.

The proposed method may be computer-implemented. Also, embodiments may exclude a method for performing mental acts as such.

According to another aspect, there is provided a computer program product for representation of CT data, wherein the computer program product comprises a computer-readable storage medium having computer-readable program code embodied therewith, the computer-readable program code configured to perform all of the steps of a proposed embodiment.

Thus, there may also be provided a computer system comprising: a computer program product according to proposed embodiment; and one or more processors adapted to perform a method according to a proposed concept by execution of the computer-readable program code of said computer program product.

According to still another aspect of the invention, there is provided a medical data processing system for processing CT data, the system comprising: a control unit configured to identify first and second materials of interest for CT data of a plurality of CT images, wherein at least one of the first and second materials of interest is neither air nor water; and a data processor arrangement configured to normalize the Hounsfield unit scale for the first and second materials of interest across the CT data so that the HU values for each of the first and second materials of interest are substantially constant across the plurality of CT images.

The system may be remotely located from a user device for representation of CT data. In this way, a user (such as a medical professional) may have an appropriately arranged system that can receive data/information at a location remotely located from the system for processing CT data. Embodiments may therefore enable a user to visualize, review and/or interpret CT data using a local system (which may, for example, comprise a portable display device, such as a laptop, tablet computer, mobile phone, PDA, etc.). By way of example, embodiments may provide an application for a mobile computing device, and the application may be executed and/or controlled by a user of the mobile computing device.

The system may further include: a server device comprising the system for processing CT data; and a client device comprising a user-interface. Dedicated data processing means may therefore be employed for the purpose of processing CT data according to the proposed concept(s), thus reducing processing requirements or capabilities of other components or devices of the system.

The system may further include a client device, wherein the client device comprises the control unit, data processor arrangement and a display unit. In other words, a user (such as a doctor, scanner technician or medical professional) may have an appropriately arranged client device (such as a laptop, tablet computer, mobile phone, PDA, etc.) which processes received data for representation and generates a display control signal. Purely by way of example, embodiments may therefore provide a system that enables CT data review/assessment for one or more subjects (e.g. patients) from a single location, wherein real-time communication between a CT scanner and a user (e.g. clinician, technician, medical professional or doctor) is provided and can have its functionality extended or modified according to proposed concepts, for example.

It will be understood that processing capabilities may therefore be distributed throughout the system in different ways according to predetermined constraints and/or availability of processing resources.

Thus, there may be proposed concepts for employing material-specific HU scale (other than the conventional HU scale which normalizes the attenuation with respect to air and water). This may help to improve representation and/or visualization of CT data, by ensuring that a contrast between materials of interest remains constant across CT data captured at different X-ray energy levels.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a graph illustrating the variation of HU with X-ray energy levels for various materials of interest according to the conventional HU scale, wherein the HU scale normalizes the attenuation with respect to air and water;
Fig. 2 is a graph illustrating the variation of HU with X-ray energy levels for various materials according to a HU scale that is normalized according to an embodiment with respect to water and bone;
Fig. 3 is a graph illustrating the variation of HU with X-ray energy levels for various materials according to a HU scale that is normalized according to an embodiment with respect to water and iodine;
Fig. 4 is simplified flow diagram of a method for representation of CT data according to an embodiment;
Fig. 5 is a graph illustrating the variation of HU with X-ray energy levels for various materials according to a HU scale that is normalized according to an embodiment with respect to iodine and bone;
Fig. 6 is a graph illustrating the variation of HU with X-ray energy levels for various materials according to a HU scale that is normalized according to another embodiment; and
Fig. 7 is a simplified block diagram of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. The mere fact that certain measures are recited in mutually different dependent claims does not indicate that a combination of these measures cannot be used to advantage.

Variations to the disclosed embodiments can be understood and effected by those skilled in the art in practicing the claimed invention, from a study of the drawings, the disclosure and the appended claims. **In** the claims, the word "comprising" does not exclude other elements or steps, and the indefinite article "a" or "an" does not exclude a plurality.

It should be understood that the Figures are merely schematic and are not drawn to scale. It should also be understood that the same reference numerals are used throughout the Figures to indicate the same or similar parts.

The invention proposes concepts for aiding or improving representation and visualization of CT data. **In** particular, embodiments may provide a method and/or system which normalizes the HU scale for material of interest (other than air or water) across the CT data so that the HU values for material of interest are substantially constant across a plurality of CT images.

**In** particular, proposed concepts may provide an approach to providing a material-specific HU scale. The material specific HU scale may be used in image viewers, to represent the intensity values. However, since users may be familiar with interpreting the standard/conventional HU values (normalized with respect to air and water), a likely application is for translating the level/window settings from one energy level to another, whilst the viewer still reports normal air-water HU values. The material specific HU could also directly be used by the viewer to represent the decomposition of the signal as a function of the two materials. Accordingly, embodiments may be used in relation to CT data representation and assessment, thereby supporting improved medical assessment and improved Clinical Decision Support (CDS).

By way of example only, illustrative embodiments may be utilized in many different types of clinical, medical or subject-related environments, such as a hospital, doctor's office, ward, care home, person's home, etc.

Proposed concepts may provide schemes, solutions, concepts, designs, methods and systems pertaining to improving representation or visualization of CT data. **In** particular, embodiments of the invention propose that the HU scale can be normalized for materials other than air and water by using one or more different reference materials. **In** this way, embodiments may provide a different HU scale that is normalized with respect to two materials of interest (where at least one of the materials is neither air nor water). A material-specific HU scale may thus be provided by such embodiments.

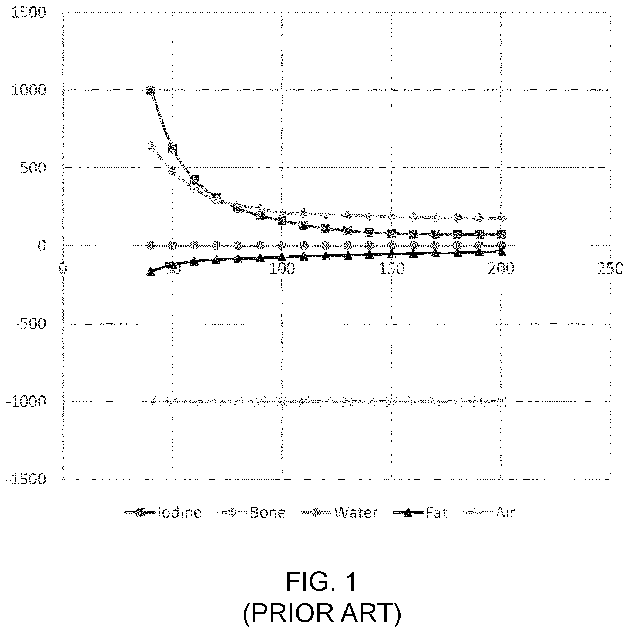

Fig. 1 is a graph illustrating the variation of HU with X-ray energy levels for various materials of interest according to the conventional HU scale (wherein the HU scale normalizes the attenuation with respect to air and water). From the graph of Fig. 1, it can be seen that the HU value for air is equal to -1000 HU across the various X-ray energy levels, and that the HU value for water is equal to 0 HU across the various X-ray energy levels. That is, using HU scale according to accepted convention, the HU values for each of air and water are substantially constant across CT X-ray energy levels.

For the materials other than water and air, such as iodine, water or bone, the HU values vary significantly with respect to X-ray energy level. This is problematic for interpretation of monoenergetic images at different energy levels. For instance, it can make it difficult to review and/or optimize level/window settings when scrolling through images of different energy levels. It is proposed to address this issue by making the HU adaptable for materials of interest other than air or water.

In particular, it is proposed to normalize the Hounsfield unit scale for the first and second materials of interest (wherein at least one of the first and second materials of interest is neither air nor water) across the CT data, so that the HU values for each of the first and second materials of interest are substantially constant across a plurality of CT images. By way of example, such normalizing of the HU scale may be achieved by adjusting a local attenuation value *µ* according to the following equation: ${HU}_{α , β} = - T \times \frac{μ - {μ}_{β}}{{μ}_{β} - {μ}_{α}}$ (ii) wherein T is the target value (e.g. 10, 100, 500, -1000, etc.), *µ_{α}* is the local attenuation value for the first material, and *µ_{β}* is the local attenuation for the second material.

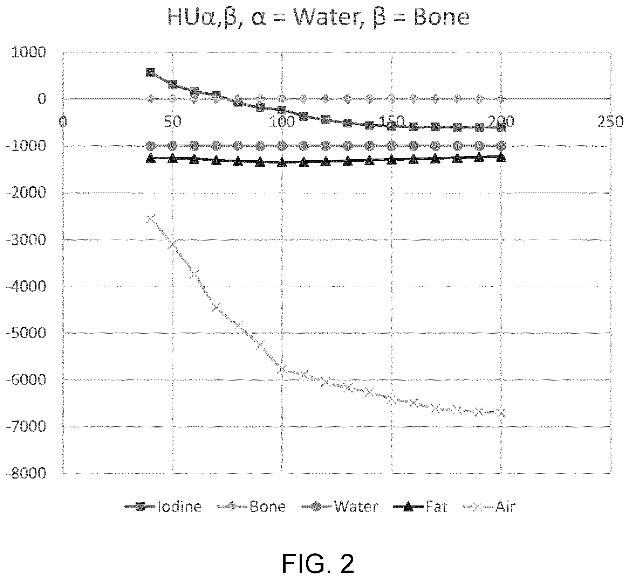

Referring now to Fig. 2, an example of the proposed concept is illustrated wherein the first material of interest is water and the second material of interest is bone. Specifically, Fig. 2 is a graph illustrating the variation of HU with X-ray energy levels for various materials according to a HU scale that is normalized with respect to water and bone. From the graph of Fig. 2, it can be seen that the HU value for water is equal to -1000 HU across the various X-ray energy levels, and that the HU value for bone is equal to 0 HU across the various X-ray energy levels. That is, using a HU scale normalized to water and bone according to the proposed concept(s), the HU values for each of water and bone are substantially constant across CT X-ray energy levels.

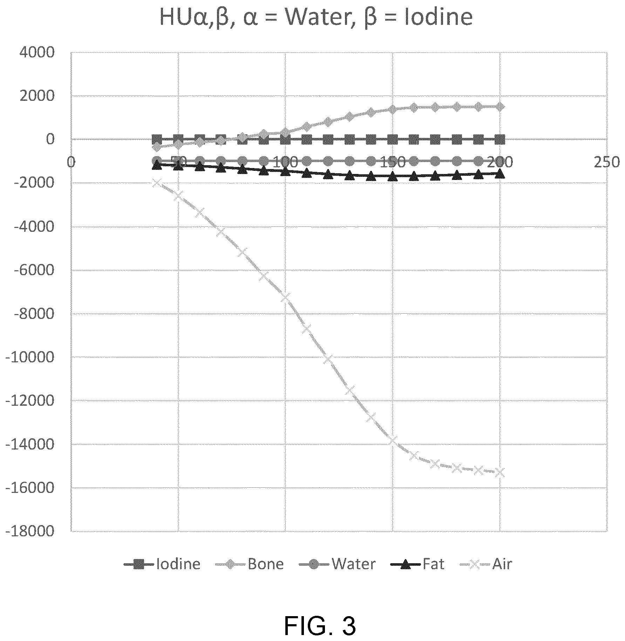

By of further example, Fig. 3 illustrates an embodiment wherein the first material of interest is water and the second material of interest is iodine. Specifically, Fig. 3 is a graph illustrating the variation of HU with X-ray energy levels for various materials according to a HU scale that is normalized with respect to water and iodine. From the graph of Fig. 3, it can be seen that the HU value for water is equal to -1000 HU across the various X-ray energy levels, and that the HU value for iodine is equal to 0 HU across the various X-ray energy levels. That is, using a HU scale normalized to water and iodine according to the proposed concept(s), the HU values for each of water and iodine are substantially constant across CT X-ray energy levels.

From the graphs of Figs 2 and 3, it can be appreciated that the contrast of the selected materials of interest remains constant over the range of X-ray energy levels, while the contrasts of the other materials vary across the range of X-ray energy levels.

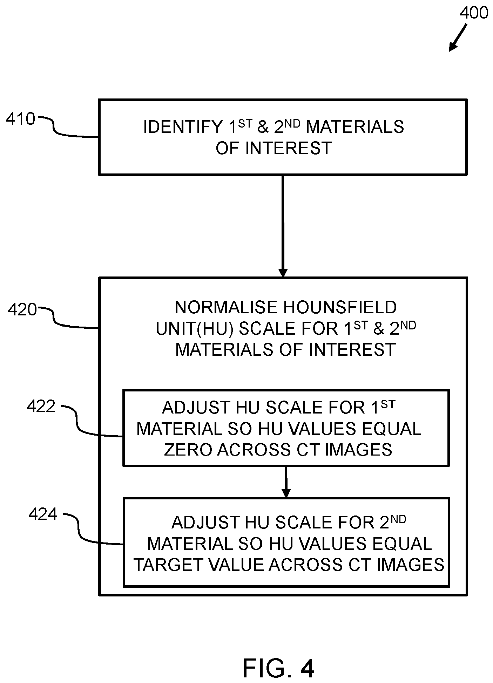

Considering the preceding description of the embodiments of Figs 2 and 3, a method for representation of CT data according to an embodiment will now be described with reference to Fig. 4.

Fig. 4 is simplified flow diagram of a method 400 for representation of CT data according to an embodiment. Here, the CT data is that of a plurality of CT images, specifically a plurality of monoenergetic spectral images.

The method begins with the step 410 of identifying first and second materials of interest for the CT data. At least one of the first and second materials of interest is neither air nor water. In this example, the first material of interest is one of the set of: iodine; bone; and fat. The materials of interest may, for example, be identified based on a user input signal (e.g. received via a user interface). This may, for instance, be defined according to two sample tissues/material from a scan image (e.g. a user may interact with a scan image to identify a first region of interest defining a first material, and to identify a second region of interest defining a second material).

The method then continues to the step 420 of normalizing the Hounsfield unit scale for the first and second materials of interest across the CT data so that the HU values for each of the first and second materials of interest are substantially constant across the plurality of CT images. Here, normalizing the Hounsfield unit scale for the first and second materials across the CT data comprises two sub-steps 422 and 424.

Step 422 comprises adjusting the Hounsfield unit scale for the first material of interest across the CT data so that the HU values for the first material of interest across the plurality of CT images are substantially equal to zero.

Step 424 comprises adjusting the Hounsfield unit scale for the first material of interest across the CT data so that the HU values for the second material of interest across the plurality of CT images are substantially equal to a target value T (such as 0, 100 or -1000 for example), wherein the target value T thus defines the reference point/value of the adjusted scale.

As has already been demonstrated above, the step 420 of normalizing the Hounsfield unit scale for the first and second materials across the CT data may comprise adjusting a local attenuation value *µ* according to the following equation: ${HU}_{α , β} = - T \times \frac{μ - {μ}_{β}}{{μ}_{β} - {μ}_{α}}$ (ii) wherein T is the target value (e.g. 100, 500, -1000, etc.), *µ_{α}* is the local attenuation value for the first material, and *µ_{β}* is the local attenuation for the second material.

It is noted, however, that an issue may arise when the contrast of the two selected materials (i.e. the first and second materials of interest) is inverted at some point in the spectrum (because this might cause the contrast in visual representation to be inverted entirely). An example of a selected material combination where this occurs is for bone and iodine, where from Figs 2 and 3 it can be seen that the variations in HU for iodine and bone cross at an X-ray energy level of approximately 75 keV (dependent on the concentration of Iodine

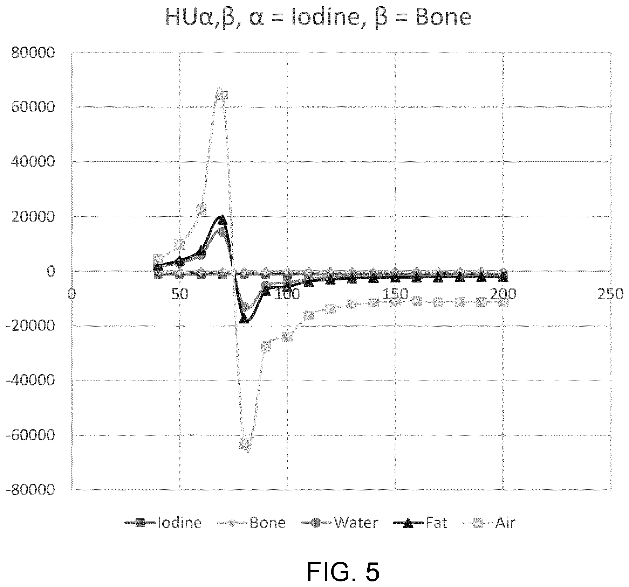

Considering further the material combination of bone and iodine, Fig. 5 illustrates an embodiment wherein the first material of interest is iodine and the second material of interest is bone. Specifically, Fig. 5 is a graph illustrating the variation of HU with X-ray energy levels for various materials according to a HU scale that is normalized with respect to iodine and bone. From the graph of Fig. 5, it can be seen that the HU value for iodine is equal to -1000 HU across the various X-ray energy levels, and that the HU value for bone is equal to 0 HU across the various X-ray energy levels. That is, using a HU scale normalized to iodine and bone, the HU values for each of iodine are substantially constant across CT X-ray energy levels (at -1000 HU and 0 HU, respectively).

From the graph of Fig. 5, it can be appreciated that the contrast of the selected materials of interest (iodine and bone) remains constant over the range of X-ray energy levels, while the contrasts of the other materials vary across the range of X-ray energy levels and invert at an X-ray energy level of approximately 75 keV. Thus, normalizing the HU scale with respect to iodine and bone inverts the contrast for the other materials. For this reason, it is preferably to assure that µ_{α} < µ_{β}, or that the scale is inverted.

By way of example, this may be achieved by adjusting a local attenuation value *µ* according to the following equation: ${HUadj}_{α , β} = - T \times \frac{μ - max \left({μ}_{β}, {μ}_{α}\right)}{max \left({μ}_{β}, {μ}_{α}\right) - min \left({μ}_{β}, {μ}_{α}\right)}$ (iii), wherein T is the target value (e.g. 100, 500, -1000, etc.), *µ_{α}* is the local attenuation value for the first material, and *µ_{β}* is the local attenuation for the second material.

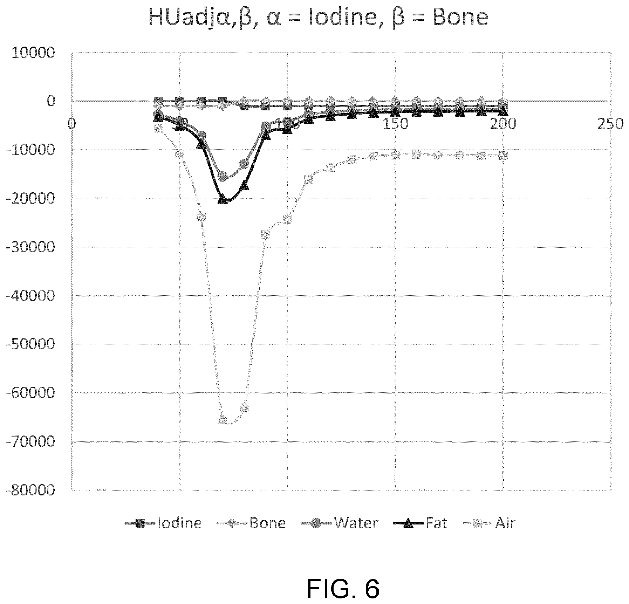

Fig. 6 is a graph illustrating the variation of HU with X-ray energy levels for various materials according to a HU scale that is normalized with respect to iodine and bone using Equation (iii) above. From the graph of Fig. 6, it can be seen that the HU values for iodine and bone remain generally constant across the various X-ray energy levels, but they invert at an X-ray energy level of approximately 75 keV. It is also seen that the HU values for the other materials remain below those for iodine and bone across the range of X-ray energy levels (i.e. the contrast for the other materials does not invert).

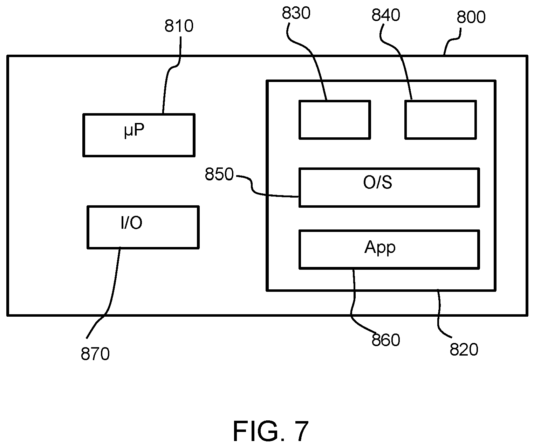

Fig. 7 illustrates an example of a computer system 800 within which one or more parts of an embodiment may be employed. Various operations discussed above may utilize the capabilities of the computer 800. For example, one or more parts of a system for providing a subject-specific user interface may be incorporated in any element, module, application, and/or component discussed herein. In this regard, it is to be understood that system functional blocks can run on a single computer or may be distributed over several computers and locations (e.g. connected via internet).

The computer 800 includes, but is not limited to, PCs, workstations, laptops, PDAs, palm devices, servers, storages, and the like. Generally, in terms of hardware architecture, the computer 800 may include one or more processors 810, memory 820, and one or more I/O devices 870 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 810 is a hardware device for executing software that can be stored in the memory 820. The processor 810 can be virtually any custom made or commercially available processor, a central processing unit (CPU), a digital signal processor (DSP), or an auxiliary processor among several processors associated with the computer 800, and the processor 810 may be a semiconductor-based microprocessor (in the form of a microchip) or a microprocessor.

The memory 820 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 820 may incorporate electronic, magnetic, optical, and/or other types of storage media. Note that the memory 820 can have a distributed architecture, where various components are situated remote from one another, but can be accessed by the processor 810.

The software in the memory 820 may include one or more separate programs, each of which comprises an ordered listing of executable instructions for implementing logical functions. The software in the memory 820 includes a suitable operating system (O/S) 850, compiler 840, source code 830, and one or more applications 860 in accordance with exemplary embodiments. As illustrated, the application 860 comprises numerous functional components for implementing the features and operations of the exemplary embodiments. The application 860 of the computer 800 may represent various applications, computational units, logic, functional units, processes, operations, virtual entities, and/or modules in accordance with exemplary embodiments, but the application 860 is not meant to be a limitation.

The operating system 850 controls the execution of other computer programs, and provides scheduling, input-output control, file and data management, memory management, and communication control and related services. It is contemplated by the inventors that the application 860 for implementing exemplary embodiments may be applicable on all commercially available operating systems.

Application 860 may be a source program, executable program (object code), script, or any other entity comprising a set of instructions to be performed. When a source program, then the program is usually translated via a compiler (such as the compiler 840), assembler, interpreter, or the like, which may or may not be included within the memory 820, so as to operate properly in connection with the O/S 850. Furthermore, the application 860 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, .NET, and the like.

The I/O devices 870 may include input devices such as, for example but not limited to, a mouse, keyboard, scanner, microphone, camera, etc. Furthermore, the I/O devices 870 may also include output devices, for example but not limited to a printer, display, etc. Finally, the I/O devices 870 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 870 also include components for communicating over various networks, such as the Internet or intranet.

If the computer 800 is a PC, workstation, intelligent device or the like, the software in the memory 820 may further include a basic input output system (BIOS) (omitted for simplicity). The BIOS is a set of essential software routines that initialize and test hardware at startup, start the O/S 850, and support the transfer of data among the hardware devices. The BIOS is stored in some type of read-only-memory, such as ROM, PROM, EPROM, EEPROM or the like, so that the BIOS can be executed when the computer 800 is activated.

When the computer 800 is in operation, the processor 810 is configured to execute software stored within the memory 820, to communicate data to and from the memory 820, and to generally control operations of the computer 800 pursuant to the software. The application 860 and the O/S 850 are read, in whole or in part, by the processor 810, perhaps buffered within the processor 810, and then executed.

When the application 860 is implemented in software it should be noted that the application 860 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 860 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The method of Fig. 4 may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

Processed CT data according to an embodiment may be stored on a storage medium. Likewise, such CT data may be transmitted as a signal modulated onto an electromagnetic carrier wave. The signal may be defined according to a standard for digital communications. The carrier wave may be an optical carrier, a radio-frequency wave, a millimeter wave, or a near field communications wave. It may be wired or wireless.

To the extent that an embodiment is implemented partly or wholly in hardware, the blocks shown in the block diagrams of Fig. 7 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A computer-implemented method for representation of CT data, the method comprising
identifying (410) first and second materials of interest for CT data of a plurality of CT images, wherein at least one of the first and second materials of interest is neither air nor water; and
normalizing (420) the Hounsfield unit scale for the first and second materials of interest across the CT data so that the HU values for each of the first and second materials of interest are substantially constant across the plurality of CT images, the normalizing comprising:
adjusting a local attenuation value *µ* according to the following equation: ${HU}_{α , β} = - T \times \frac{μ - {μ}_{β}}{{μ}_{β} - {μ}_{α}}$
wherein T is the target value (e.g. 100, 500, -1000, etc.), *µ_{α}* is the local attenuation value for the first material, and *µ_{β}* is the local attenuation for the second material.

2. The method of claim 1, wherein the first or second material of interest is one of: iodine; bone; bone marrow; fat; iron; calcium; white brain matter; grey brain matter; gadolinium; gold; oxygen; xenon; neon; blood; uric acid; NaCl; or a combination thereof.

3. The method of claim 1 or 2, wherein normalizing (420) the Hounsfield unit scale for the first and second materials across the CT data comprises:
adjusting (422) the Hounsfield unit scale for the first material of interest across the CT data so that the HU values for the first material of interest across the plurality of CT images are substantially equal to zero.

4. The method of any of claims 1 to 3, further comprising:
identifying a third material of interest for the CT data, wherein the third material of interest is different from the first and second materials of interest,
and wherein normalizing the Hounsfield unit scale for the first and second materials across the CT data comprises:
determining whether a difference between: the HU values for the third material of interest; and the HU values for the first material of interest is non-zero across the plurality of CT images; and
responsive to determining the difference is not non-zero across the plurality of CT images, adjusting the Hounsfield unit scale for the first material of interest so that the difference between: the HU values for the third material of interest; and the HU values for the first material of interest is non-zero across the plurality of CT images.

5. The method of claim 4, wherein adjusting (422) the Hounsfield unit scale comprises:
adjusting a local attenuation value *µ* according to the following equation: ${HUadj}_{α , β} = - T \times \frac{μ - max \left({μ}_{β}, {μ}_{α}\right)}{max \left({μ}_{β}, {μ}_{α}\right) - min \left({μ}_{β}, {μ}_{α}\right)}$
wherein T is the target value (e.g. 100, 500, -1000, etc.), *µ_{α}* is the local attenuation value for the first material, and *µ_{β}* is the local attenuation for the second material.

6. The method of any of claims 1 to 5, wherein the plurality of CT images comprises plurality of monoenergetic spectral images.

7. A computer program comprising computer program code means which is adapted, when said computer program is run on a computer, to implement the method of any of claims 1 to 6.

8. A system (800) for processing CT data, the system comprising:
a control unit (870) configured to identify first and second materials of interest for CT data of a plurality of CT images, wherein at least one of the first and second materials of interest is neither air nor water; and
a data processor arrangement (810) configured to normalize the Hounsfield unit scale for the first and second materials of interest across the CT data so that the HU values for each of the first and second materials of interest are substantially constant across the plurality of CT images, the normalizing comprising:
adjusting a local attenuation value *µ* according to the following equation: ${HU}_{α , β} = - T \times \frac{μ - {μ}_{β}}{{μ}_{β} - {μ}_{α}}$
wherein T is the target value (e.g. 100, 500, -1000, etc.), *µ_{α}* is the local attenuation value for the first material, and *µ_{β}* is the local attenuation for the second material.

9. The system of claim 8, wherein the first or second material of interest is one of: iodine; bone; bone marrow; fat; iron; calcium; white brain matter; grey brain matter; gadolinium; gold; oxygen; xenon; neon; blood; uric acid; NaCl; or a combination thereof.

10. The system of claim 8 or 9, wherein the data processor arrangement (810) is configured to:
adjust the Hounsfield unit scale for the first material of interest across the CT data so that the HU values for the first material of interest across the plurality of CT images are substantially equal to zero.

11. The system of any of claims 8 to 10, wherein the control unit (870) is further arranged to identify a third material of interest for the CT data, wherein the third material of interest is different from the first and second materials of interest,
and wherein the data processor arrangement is configured to:
determine whether a difference between: the HU values for the third material of interest; and the HU values for the first material of interest is non-zero across the plurality of CT images; and
responsive to determining the difference is not non-zero across the plurality of CT images, adjust the Hounsfield unit scale for the first material of interest so that the difference between: the HU values for the third material of interest; and the HU values for the first material of interest is non-zero across the plurality of CT images.

12. The system of claim 8 or 9 wherein adjusting the Hounsfield unit scale comprises:
adjusting a local attenuation value *µ* according to the following equation: ${HUadj}_{α , β} = - T \times \frac{μ - max \left({μ}_{β}, {μ}_{α}\right)}{max \left({μ}_{β}, {μ}_{α}\right) - min \left({μ}_{β}, {μ}_{α}\right)}$
wherein T is the target value (e.g. 100, 500, -1000, etc.), *µ_{α}* is the local attenuation value for the first material, and *µ_{β}* is the local attenuation for the second material.

13. The system of any of claims 8 to 12, wherein the plurality of CT images comprises plurality of monoenergetic spectral images.

## Patentansprüche

1. Computerimplementiertes Verfahren zur Darstellung von CT-Daten, wobei das Verfahren Folgendes umfasst:
Identifizieren (410) erster und zweiter Materialien von Interesse für CT-Daten einer Vielzahl von CT-Bildern, wobei mindestens eines des ersten und des zweiten Materials von Interesse weder Luft noch Wasser ist; und
Normalisieren (420) der Hounsfield-Skala für das erste und das zweite Material von Interesse über die CT-Daten hinweg, sodass die HU-Werte für jedes des ersten und des zweiten Materials von Interesse über die Vielzahl der CT-Bilder hinweg im Wesentlichen konstant sind, wobei das Normalisieren Folgendes umfasst:
Anpassen eines lokalen Dämpfungswerts µ gemäß der folgenden Gleichung: ${HU}_{α , β} = - T \times \frac{μ - {μ}_{β}}{{μ}_{β} - {μ}_{α}}$
wobei T der Zielwert ist (z. B. 100, 500, -1000 usw.), *µ_{α}* der lokale Dämpfungswert für das erste Material ist und *µ_{β}* die lokale Dämpfung für das zweite Material ist.

2. Verfahren nach Anspruch 1, wobei das erste oder das zweite Material von Interesse eines der Folgenden ist: Jod; Knochen; Knochenmark; Fett; Eisen; Kalzium; weiße Hirnsubstanz; graue Hirnsubstanz; Gadolinium; Gold; Sauerstoff; Xenon; Neon; Blut; Harnsäure; NaCl; oder eine Kombination davon.

3. Verfahren nach Anspruch 1 oder 2, wobei Normalisieren (420) der Hounsfield-Skala für das erste und das zweite Material über die CT-Daten hinweg Folgendes umfasst:
Anpassen (422) der Hounsfield-Skala für das erste Material von Interesse über die CT-Daten hinweg, sodass die HU-Werte für das erste Material von Interesse über die Vielzahl der CT-Bilder im Wesentlichen gleich null sind.

4. Verfahren nach einem der Ansprüche 1 bis 3, weiter umfassend:
Identifizieren eines dritten Materials von Interesse für die CT-Daten, wobei sich das dritte Material von Interesse von dem ersten und dem zweiten Material von Interesse unterscheidet,
und wobei Normalisieren der Hounsfield-Skala für das erste und das zweite Material über die CT-Daten hinweg Folgendes umfasst:
Bestimmen, ob eine Differenz zwischen: den HU-Werten des dritten Materials von Interesse; und den HU-Werten des ersten Materials über die Vielzahl von CT-Bildern hinweg ungleich null ist; und
infolge eines Bestimmens, dass die Differenz über die Vielzahl von CT-Bildern hinweg ungleich null ist, Anpassen der Hounsfield-Skala für das erste Material von Interesse, sodass die Differenz zwischen: den HU-Werten für das dritte Material von Interesse; und den HU-Werten für das erste Material von Interesse über die Vielzahl von CT-Bildern hinweg ungleich null ist.

5. Verfahren nach Anspruch 4, wobei Anpassen (422) der Hounsfield-Skala Folgendes umfasst:
Anpassen eines lokalen Dämpfungswerts *µ* gemäß der folgenden Gleichung: ${HUadj}_{α , β} = - T \times \frac{μ - max \left({μ}_{β}, {μ}_{α}\right)}{max \left({μ}_{β}, {μ}_{A}\right) - min \left({μ}_{β}, {μ}_{A}\right)}$
wobei T der Zielwert ist (z. B. 100, 500, -1000 usw.), *µ_{α}* der lokale Dämpfungswert für das erste Material ist und *µ_{β}* die lokale Dämpfung für das zweite Material ist.

6. Verfahren nach einem der Ansprüche 1 bis 5, wobei die Vielzahl von CT-Bildern eine Vielzahl von monoenergetischen Spektralbildern umfasst.

7. Computerprogramm, das Computerprogrammcodemittel umfasst, die angepasst sind, wenn das Programm auf einem Computer ausgeführt wird, das Verfahren nach einem der Ansprüche 1 bis 6 zu implementieren.

8. System (800) zum Verarbeiten von CT-Daten, wobei das System Folgendes umfasst:
eine Steuereinheit (870), die dazu konfiguriert ist, erste und zweite Materialien von Interesse für CT-Daten einer Vielzahl von CT-Bildern zu identifizieren, wobei mindestens eines des ersten und des zweiten Materials von Interesse weder Luft noch Wasser ist; und
eine Datenprozessoranordnung (810), die dazu konfiguriert ist, die Hounsfield-Skala für das erste und das zweite Material von Interesse über die CT-Daten hinweg zu normalisieren, sodass die HU-Werte für jedes des ersten und des zweiten Materials von Interesse über die Vielzahl der CT-Bilder hinweg im Wesentlichen konstant sind, wobei das Normalisieren Folgendes umfasst:
Anpassen eines lokalen Dämpfungswerts *µ* gemäß der folgenden Gleichung: ${HU}_{α , β} = - T \times \frac{μ - {μ}_{β}}{{μ}_{β} - {μ}_{α}}$
wobei T der Zielwert ist (z. B. 100, 500, -1000 usw.), *µ_{α}* der lokale Dämpfungswert für das erste Material ist und *µ_{β}* die lokale Dämpfung für das zweite Material ist.

9. System nach Anspruch 8, wobei das erste oder das zweite Material von Interesse eines der Folgenden ist: Jod; Knochen; Knochenmark; Fett; Eisen; Kalzium; weiße Hirnsubstanz; graue Hirnsubstanz; Gadolinium; Gold; Sauerstoff; Xenon; Neon; Blut; Harnsäure; NaCl; oder eine Kombination davon.

10. System nach Anspruch 8 oder 9, wobei die Datenprozessoranordnung (810) für Folgendes konfiguriert ist:
Anpassen der Hounsfield-Skala für das erste Material von Interesse über die CT-Daten hinweg, sodass die HU-Werte für das erste Material von Interesse über die Vielzahl der CT-Bilder im Wesentlichen gleich null sind.

11. System nach einem der Ansprüche 8 bis 10, wobei die Steuereinheit (870) ferner dazu angeordnet ist, ein drittes Material von Interesse für die CT-Daten zu identifizieren, wobei sich das dritte Material von Interesse von dem ersten und dem zweiten Material von Interesse unterscheidet,
und wobei die Datenprozessoranordnung für Folgendes konfiguriert ist:
Bestimmen, ob eine Differenz zwischen: den HU-Werten des dritten Materials von Interesse; und den HU-Werten des ersten Materials über die Vielzahl von CT-Bildern hinweg ungleich null ist; und
infolge eines Bestimmens, dass die Differenz über die Vielzahl von CT-Bildern hinweg ungleich null ist, Anpassen der Hounsfield-Skala für das erste Material von Interesse, sodass die Differenz zwischen: den HU-Werten für das dritte Material von Interesse; und den HU-Werten für das erste Material von Interesse über die Vielzahl von CT-Bildern hinweg ungleich null ist.

12. System nach Anspruch 8 oder 9, wobei Anpassen der Hounsfield-Skala Folgendes umfasst:
Anpassen eines lokalen Dämpfungswerts *µ* gemäß der folgenden Gleichung: ${HUadj}_{α , β} = - T \times \frac{μ - max \left({μ}_{β}, {α}_{β}\right)}{max \left({μ}_{β}, {μ}_{α}\right) - min \left({μ}_{β}, {μ}_{α}\right)}$
wobei T der Zielwert ist (z. B. 100, 500, -1000 usw.), *µ_{α}* der lokale Dämpfungswert für das erste Material ist und *µ_{β}* die lokale Dämpfung für das zweite Material ist.

13. System nach einem der Ansprüche 8 bis 12, wobei die Vielzahl von CT-Bildern eine Vielzahl von monoenergetischen Spektralbildern umfasst.

## Revendications

1. Procédé mis en œuvre par ordinateur pour la représentation de données TDM, le procédé comprenant
l'identification (410) de premier et deuxième matériaux d'intérêt pour les données TDM d'une pluralité d'images TDM, dans lequel au moins l'un des premier et deuxième matériaux d'intérêt n'est ni l'air ni l'eau ; et
la normalisation (420) de l'échelle d'unités Hounsfield pour les premier et deuxième matériaux d'intérêt dans les données TDM de sorte que les valeurs HU pour chacun des premier et deuxième matériaux d'intérêt soient sensiblement constantes dans la pluralité d'images TDM, la normalisation comprenant :
l'ajustement d'une valeur d'atténuation locale µ selon l'équation suivante : ${HU}_{α , β} = - T \times \frac{μ - {μ}_{β}}{{μ}_{β} - {μ}_{α}}$
dans lequel T est la valeur cible (par exemple 100, 500, -1000, etc.), *µ_{α}* est la valeur d'atténuation locale pour le premier matériau, et *µ_{β}* est l'atténuation locale pour le deuxième matériau.

2. Procédé selon la revendication 1, dans lequel le premier ou le deuxième matériau d'intérêt est l'un parmi : l'iode ; l'os ; la moelle osseuse ; la graisse ; le fer ; le calcium ; la matière blanche du cerveau ; la matière grise du cerveau ; le gadolinium ; l'or ; l'oxygène ; le xénon ; le néon ; le sang ; l'acide urique ; le NaCl ; ou une combinaison de ceux-ci.

3. Procédé selon la revendication 1 ou 2, dans lequel la normalisation (420) de l'échelle d'unités Hounsfield pour les premier et deuxième matériaux à travers les données TDM comprend :
l'ajustement (422) de l'échelle d'unités Hounsfield pour le premier matériau d'intérêt à travers les données TDM de sorte que les valeurs HU pour le premier matériau d'intérêt à travers la pluralité d'images TDM soient sensiblement égales à zéro.

4. Procédé selon l'une quelconque des revendications 1 à 3, comprenant en outre :
l'identification d'un troisième matériau d'intérêt pour les données TDM, dans lequel le troisième matériau d'intérêt est différent des premier et deuxième matériaux d'intérêt,
et dans lequel la normalisation de l'échelle d'unités Hounsfield pour les premier et deuxième matériaux à travers les données TDM comprend :
la détermination du fait de savoir si une différence entre : les valeurs HU pour le troisième matériau d'intérêt ; et les valeurs HU pour le premier matériau d'intérêt, est non nulle sur la pluralité d'images TDM ; et
en réponse à la détermination du fait que la différence n'est pas non nulle sur la pluralité d'images TDM, l'ajustement de l'échelle d'unités Hounsfield pour le premier matériau d'intérêt de sorte que la différence entre : les valeurs HU pour le troisième matériau d'intérêt ; et les valeurs HU pour le premier matériau d'intérêt, soit non nulle sur la pluralité d'images TDM.

5. Procédé selon la revendication 4, dans lequel l'ajustement (422) de l'échelle d'unités Hounsfield comprend :
l'ajustement d'une valeur d'atténuation locale *µ* selon l'équation suivante : ${HUadj}_{α , β} = - T \times \frac{μ - max \left({μ}_{β}, {μ}_{α}\right)}{max \left({μ}_{β}, {μ}_{α}\right) - min \left({μ}_{β}, {μ}_{α}\right)}$
dans lequel T est la valeur cible (par exemple 100, 500, -1000, etc.), *µ_{α}* est la valeur d'atténuation locale pour le premier matériau, et *µ_{β}* est l'atténuation locale pour le deuxième matériau.

6. Procédé selon l'une quelconque des revendications 1 à 5, dans lequel la pluralité d'images TDM comprend une pluralité d'images spectrales monoénergétiques.

7. Programme informatique comprenant des moyens de code de programme informatique qui est adapté, lorsque ledit programme informatique est exécuté sur un ordinateur, pour mettre en œuvre le procédé selon l'une quelconque des revendications 1 à 6.

8. Système (800) de traitement des données TDM, le système comprenant :
une unité de commande (870) configurée pour identifier des premier et deuxième matériaux d'intérêt pour les données TDM d'une pluralité d'images TDM, dans lequel au moins l'un des premier et deuxième matériaux d'intérêt n'est ni l'air ni l'eau ; et
un agencement de processeur de données (810) configuré pour normaliser l'échelle d'unités Hounsfield pour les premier et deuxième matériaux d'intérêt dans les données TDM de sorte que les valeurs HU pour chacun des premier et deuxième matériaux d'intérêt soient sensiblement constantes dans la pluralité d'images TDM, la normalisation comprenant :
l'ajustement d'une valeur d'atténuation locale *µ* selon l'équation suivante : ${HU}_{α , β} = - T \times \frac{μ - {μ}_{β}}{{μ}_{β} - {μ}_{α}}$
dans lequel T est la valeur cible (par exemple 100, 500, -1000, etc.), *µ_{α}* est la valeur d'atténuation locale pour le premier matériau, et *µ_{β}* est l'atténuation locale pour le deuxième matériau.

9. Système selon la revendication 8, dans lequel le premier ou le deuxième matériau d'intérêt est l'un parmi : l'iode ; l'os ; la moelle osseuse ; la graisse ; le fer ; le calcium ; la matière blanche du cerveau ; la matière grise du cerveau ; le gadolinium ; l'or ; l'oxygène ; le xénon ; le néon ; le sang ; l'acide urique ; le NaCl ; ou une combinaison de ceux-ci.

10. Système selon la revendication 8 ou 9, dans lequel l'agencement de processeur de donnée (810) est configuré pour :
ajuster l'échelle d'unités Hounsfield pour le premier matériau d'intérêt à travers les données TDM de sorte que les valeurs HU pour le premier matériau d'intérêt à travers la pluralité d'images TDM soient sensiblement égales à zéro.

11. Système selon l'une quelconque des revendications 8 à 10, dans lequel l'unité de commande (870) est en outre agencée pour identifier un troisième matériau d'intérêt pour les données TDM, dans lequel le troisième matériau d'intérêt est différent des premier et deuxième matériaux d'intérêt,
et dans lequel l'agencement de processeur de données est configuré pour :
déterminer si une différence entre : les valeurs HU pour le troisième matériau d'intérêt ; et les valeurs HU pour le premier matériau d'intérêt, est non nulle sur la pluralité d'images TDM ; et
en réponse à la détermination du fait que la différence n'est pas non nulle sur la pluralité d'images TDM, ajuster l'échelle d'unités Hounsfield pour le premier matériau d'intérêt de sorte que la différence entre : les valeurs HU pour le troisième matériau d'intérêt ; et les valeurs HU pour le premier matériau d'intérêt, soit non nulle sur la pluralité d'images TDM.

12. Système selon la revendication 8 ou 9, dans lequel l'ajustement de l'échelle d'unités Hounsfield comprend :
l'ajustement d'une valeur d'atténuation locale *µ* selon l'équation suivante : ${HUadj}_{α , β} = - T \times \frac{μ - max \left({μ}_{β}, {μ}_{α}\right)}{max \left({μ}_{β}, {μ}_{α}\right) - min \left({μ}_{β}, {μ}_{α}\right)}$
dans lequel T est la valeur cible (par exemple 100, 500, -1000, etc.), *µ_{α}* est la valeur d'atténuation locale pour le premier matériau, et *µ_{β}* est l'atténuation locale pour le deuxième matériau.

13. Système selon l'une quelconque des revendications 8 à 12, dans lequel la pluralité d'images TDM comprend une pluralité d'images spectrales monoénergétiques.
